# EUROPÄISCHE PATENTANMELDUNG

(11) **EP 1 645 861 A1**
(43) Veröffentlichungstag der Anmeldung: **12.04.2006**
(21) Anmeldenummer: 04023744.8
(22) Anmeldetag: 06.10.2004
(51) Int. Cl.: G01M 11/00

(54) **Vorrichtung und Verfahren zum Messen der chromatischen Dispersion einer optischen Übertragungsstrecke**

(71) Anmelder: Acterna Germany GmbH, 72800 Eningen (DE)
(72) Erfinder: Löcklin, Eberhard, Dr., 72766 Reutlingen (DE)
(74) Vertreter: Kohler Schmid Möbus

(57) **Zusammenfassung**

Bei einem Verfahren zum Messen der chromatischen Dispersion eines Lichtwellenleiters (2) wird ein amplitudenmoduliertes breitbandiges optisches Signal in die zu messende optische Übertragungsstrecke eingespeist, wobei das übertragene Signal in einen ersten Messpfad (5), in dem das übertragene Signal bei einer optischen Frequenz demoduliert wird, und in einen zweiten Messpfad (8), in dem das übertragene Signal bei einer weiteren optischen Frequenz mit vorbekanntem Frequenzabstand zur optischen Frequenz des ersten Messpfads (8) demoduliert wird, aufgespaltet wird, wobei aus den demodulierten Signalen des ersten und zweiten Messpfads (5, 8) eine Phasendifferenz (Δβ) bestimmt und daraus die chromatische Dispersion der optischen Übertragungsstrecke ermittelt wird.

## Beschreibung

Die Erfindung betrifft ein Verfahren und eine Vorrichtung zum Messen der chromatischen Dispersion einer optischen Übertragungsstrecke.

Ein derartiges Verfahren und eine derartige Vorrichtung sind beispielsweise durch die EP-A-1 233 256 bekannt geworden.

Da der Brechungskoeffizient von optischen Glasfasern wellenlängenabhängig ist, ergeben sich für Signale unterschiedlicher Wellenlänge auch unterschiedliche Ausbreitungsgeschwindigkeiten. Das kann dazu führen, dass Spektralanteile eines modulierten optischen Signals nicht gleichzeitig am fernen Ende eintreffen und es zu Signalverzerrungen kommt.

Als Maß für die Laufzeit einer Signalkomponente wird die Gruppenlaufzeit t_{g} verwendet. Als chromatischen Dispersionskoeffizienten D bezeichnet man die Ableitung der Gruppenlaufzeit t_{g} nach der Wellenlänge λ bezogen auf die Länge L der Faser: D = 1/L *dt_{g}/dλ.

Die meist verwendeten Messverfahren ("Modulation Phase-Shift Method", "Differential Phase-Shift Method") beruhen auf der klassischen Nyquist-Methode zur Gruppenlaufzeitmessung. Das optische Trägersignal wird mit einer Frequenz w amplitudenmoduliert, die klein ist im Vergleich zur Trägerfrequenz. Im 1550 nm-Bereich liegen die optischen Frequenzen bei rund 200 THz, so dass diese Forderung für Modulationsfrequenzen bis in den hohen GHz-Bereich erfüllt ist. Die Modulationsfrequenz wird am Ende des Prüflings durch Demodulation zurückgewonnen und ihre Phasenlage mit derjenigen der Modulationsquelle verglichen. Nach Nyquist ergibt sich dann die Gruppenlaufzeit zu: t_{g} = Δβ/ω.

Zur Bestimmung der chromatischen Dispersion ist die Gruppenlaufzeitbestimmung in Abhängigkeit von der Wellenlänge durchzuführen und dann die Ableitung der Gruppenlaufzeit nach der Wellenlänge zu berechnen.

In der Praxis wird oft nur mit wenigen diskreten Wellenlängen gearbeitet, so dass auch nur eine näherungsweise Bestimmung der chromatischen Dispersion erfolgt. Die benötigte Zahl und der Abstand der Messwellenlängen hängen vom Prüfling ab. Für Glasfasern genügen relativ grobe Wellenlängenschritte von ca. 5 oder 10 nm. Für schmalbandige Prüflinge, wie z.B. Dispersionskompensatoren mit Chirped Fiber Bragg Gratings, ist eine wesentlich geringere Schrittweite erforderlich (z.B. < 0,5 nm).

Die klassische Messanordnung für die Nyquist-Methode verwendet eine abstimmbare Laserquelle und einen nachgeschalteten ("externen") Modulator. Als Modulationsfrequenzen findet man Werte im Bereich 50 MHz bis einige GHz, was wiederum eine leistungsfähige Hochfrequenzquelle und einen breitbandigen Photodetektor erforderlich macht. Die Gesamtausrüstung wird damit ziemlich teuer. Darüber hinaus sind diese Anordnungen nicht für Streckenmessungen geeignet, weil der Auswerteseite das sendeseitige Modulationssignal als Referenz zugeführt werden muss. Dies geschieht bei bekannten Lösungen entweder auf elektrischem oder optischem Wege über eine zusätzliche Kabelverbindung.

Aus der eingangs genannten EP-A-1 233 256 ist ein Verfahren zum Messen der chromatischen Dispersion einer optischen Übertragungsstrecke, vorzugsweise eines Lichtwellenleiters, bekannt, wobei ein amplitudenmoduliertes breitbandiges optisches Signal in die zu messende optische Übertragungsstrecke eingespeist wird, wobei das übertragene Signal in einen Referenzpfad, in dem aus dem übertragenen Signal die Modulationsfrequenz demoduliert wird, und in einen Messpfad, in dem das übertragene Signal bei mehreren optischen Frequenzen jeweils demoduliert wird, aufgespaltet wird, und wobei aus den Phasendifferenzen zwischen den mehreren demodulierten Signalen des Messpfads und dem demodulierten Signal des Referenzpfads die chromatische Dispersion der optischen Übertragungsstrecke ermittelt wird.

Dazu ist sendeseitig eine optische Breitbandquelle vorgesehen, die mit einer hochfrequenten Schwingung amplitudenmoduliert ist. Das übertragene optische Signal wird empfangsseitig als Referenzsignal in einen Referenzpfad und als Messsignal in einen Messpfad aufgeteilt. Das Referenzsignal durchläuft ein breitbandiges optisches Filter, und dann wird mit einem Photodetektor das Modulationssignal zurückgewonnen, das als Referenz für einen Phasenvergleich dient. Das Messsignal durchläuft ein abstimmbares schmalbandiges optisches Filter, und auch dort wird mit einem Photodetektor das Modulationssignal zurückgewonnen, dessen Phasenlage vom Referenzsignal wegen der chromatischen Dispersion abweicht. Aus der Änderung der Phasendifferenz bei verschiedenen Stellungen des schmalbandigen optischen Filters wird dann die chromatische Dispersion bestimmt.

Bei diesem Verfahren muss das Spektrum des ausgesendeten Signals so breit sein, dass sowohl die Wellenlänge λₘₑₛₛ des Messpfades als auch die Wellenlänge λ_{ref} des Referenzpfades enthalten ist. Außerdem muss die zu messende Glasfaserstrecke sowohl bei der Wellenlänge λₘₑₛₛ als auch bei der Wellenlänge λ_{ref} übertragen. Faserstrecken, welche nur ein schmales Spektrum übertragen, so dass die Wellenlänge des Referenzpfades nur abgeschwächt oder gar nicht übertragen wird, können mit diesem Verfahren daher nicht gemessen werden.

Der vorliegenden Erfindung liegt die Aufgabe zugrunde, ein Verfahren und eine Vorrichtung der eingangs genannten Art dahingehend weiterzubilden, die Messung auch dann zu ermöglichen, wenn nur ein schmales Spektrum übertragen wird.

Diese Aufgabe wird erfindungsgemäß gelöst durch ein Verfahren zum Messen der chromatischen Dispersion einer optischen Übertragungsstrecke, vorzugsweise eines Lichtwellenleiters, wobei ein amplitudenmoduliertes optisches Signal in die zu messende optische Übertragungsstrecke eingespeist wird, wobei das übertragene Signal in einen ersten Messpfad, in dem das übertragene Signal bei einer optischen Frequenz demoduliert wird, und in einen zweiten Messpfad, in dem das übertragene Signal bei einer weiteren optischen Frequenz mit vorbekanntem Frequenzabstand zur optischen Frequenz des ersten Messpfads demoduliert wird, aufgespaltet wird, wobei aus den demodulierten Signalen des ersten und zweiten Messpfads eine Phasendifferenz bestimmt und daraus die chromatische Dispersion der optischen Übertragungsstrecke ermittelt wird.

Typischerweise werden beim oben beschriebenen Verfahren zwei gleichartige Messpfade bei zwei optischen Frequenzen (Wellenlängen) λ₁=λ-dλ/2 und λ₂=λ+dλ/2 im Abstand dλ verwendet. Bei der Messung über einen Wellenlängenbereich werden im Gegensatz zum aus der EP-A-1 233 256 bekannten Verfahren, bei dem nur das Filter im Messpfad verstellt wird, vorliegend beide Filter verstellt. Das Verfahren ergibt den Mittelwert des Dispersionskoeffizienten D im Intervall dλ. Der Abstand dλ muss daher klein genug für die gewünschte Auflösung des Dispersionskoeffizienten über der Wellenlänge sein. Auch muss der Abstand so klein sein, dass beide Wellenlängen innerhalb des übertragenen Spektrums liegen. Typischerweise ist der Abstand dλ im verwendeten Wellenlängenbereich nicht exakt konstant, sondern verändert sich schwach in Abhängigkeit von der verwendeten Wellenlänge. Der Abstand dλ ergibt sich aus Kalibrierdaten oder aufgrund der Konstruktion der für das Verfahren verwendeten Vorrichtung.

Bei einer bevorzugten Variante des Verfahrens wird das übertragene Signal zu ca. 50% in den ersten Messpfad und zu ca. 50% in den zweiten Messpfad eingekoppelt. Bei einer solchen Einkopplung des übertragenen Signals und bei Verwendung gleichartiger Filter haben die demodulierten Signale beider Messpfade dieselbe Leistung. Alternativ ist es aber auch möglich, die Leistung des übertragenen Signals in einem beliebigen Verhältnis auf die beiden Messkanäle zu verteilen.

Bei einer weiteren bevorzugten Variante werden vor der Phasendifferenzmessung die demodulierten Signale in einen niedrigeren Frequenzbereich umgesetzt. Durch Frequenzmischen können die demodulierten Signale beider Messpfade, z.B. 20 MHz-Signale, in einen niedrigeren Frequenzbereich, z.B. in den kHz Bereich, umgesetzt werden.

Die Aufgabe wird erfindungsgemäß auch gelöst durch eine Vorrichtung zum Messen der chromatischen Dispersion einer optischen Übertragungsstrecke, vorzugsweise eines Lichtwellenleiters, insbesondere zur Durchführung des oben beschriebenen Verfahrens, mit einer amplitudenmodulierten Lichtquelle eingangsseitig der zu messenden optischen Übertragungsstrecke, mit einer das übertragene optische Signal in einen ersten Messpfad und einen zweiten Messpfad aufspaltenden Einrichtung, mit jeweils einem abstimmbaren schmalbandigen optischen Filter im ersten Messpfad und im zweiten Messpfad, mit jeweils einem Photodetektor im ersten Messpfad und im zweiten Messpfad und mit einer ausgangsseitig der beiden Photodetektoren vorgesehenen Phasenmesseinrichtung zum Ermitteln der jeweils zwischen erstem und zweiten Messpfad vorhandenen Phasendifferenzen, aus denen die chromatische Dispersion der optischen Übertragungsstrecke bestimmt werden kann.

Die Phasenmesseinrichtung bestimmt die Phasendifferenzen Δβ zwischen beiden Pfaden. Daraus erhält man direkt dem Gruppenlaufzeitunterschied dt_{g}=Δβ/ω. Der chromatische Dispersionskoeffizient berechnet sich daraus wie bekannt zu D=dt_{g}/dλ.

Bei einer vorteilhaften Ausführungsform weist die Vorrichtung eine mit dem ersten Messpfad und dem zweiten Messpfad verbundene Frequenzquelle auf, welche die demodulierten Signale beider Messpfade durch Frequenzmischen in einen niedrigeren Frequenzbereich umsetzt. Die Anforderungen an die Phasensensibilität der Frequenzquelle sind theoretisch gering, da deren Einfluss im Referenzpfad und Messpfad gleichermaßen wirksam ist und sich bei der Phasenmessung heraushebt. Die umgesetzten Signale werden verstärkt und begrenzt, damit die Amplitude des Messsignals nicht in das Messergebnis eingeht.

Bei einer bevorzugten Ausführungsform werden die beiden abstimmbaren schmalbandigen optischen Filter durch eine gemeinsame optische Baugruppe gebildet. Die Vorrichtung funktioniert auch mit zwei unabhängigen Filtern, die Verwendung zweier durchstimmbarer Filter ist aber sehr aufwändig. Wesentlich effektiver ist die Verwendung einer optischen Baugruppe, die intern zwei Pfade bei λ₁ und λ₂ besitzt und die Signale bei diesen Wellenlängen zwei getrennten Photodetektoren zuführt. Die Baugruppe kann beispielsweise als Monochromator mit zwei Ausgangsspalten oder als Monochromator mit zwei übereinander angeordneten, gegeneinander versetzten Pfaden ausgeführt sein.

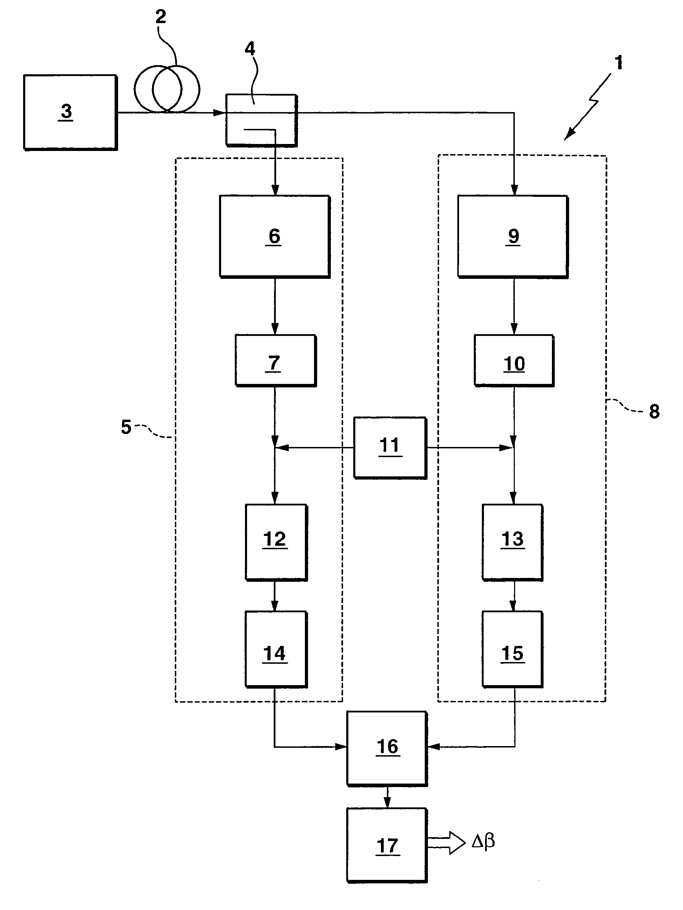

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die einzige Figur zeigt schematisch die erfindungsgemäße Vorrichtung zur Messung der chromatischen Dispersion.

Die insgesamt mit **1** bezeichnete Vorrichtung dient zum Messen der chromatischen Dispersion einer optischen Übertragungsstrecke, die im dargestellten Ausführungsbeispiel durch einen Lichtwellenleiter **2** (z.B. Glasfaser) gebildet ist.

Der Lichtwellenleiter 2 ist einenends an eine optische Lichtquelle **3** angeschlossen, die intern mit einer im Vergleich zu den optischen Frequenzen niedrigeren Frequenz, z.B. mit 20 MHz, amplitudenmoduliert ist.

Anderenends ist der Lichtwellenleiter 2 an eine Einrichtung **4** angeschlossen, die das im Lichtwellenleiter 2 übertragene optische Signal in zwei Pfade aufteilt: 50% der Leistung laufen in einem ersten Messpfad **5** über ein erstes abstimmbares optisches Filter **6** in einen Photodetektor **7** (z.B. eine PIN-Diode). Die anderen 50% der Leistung sind für einen zweiten Messpfad **8** bestimmt und durchlaufen ein zweites abstimmbares optisches Filter **9.** Am Ausgang des zweiten Filters 9 findet man einen herausgefilterten schmalen Spektralanteil des übertragenen Spektrums, der aufgrund der chromatischen Dispersion des Lichtwellenleiters 2 (Prüfling) gegenüber dem ersten Messpfad 5 eine abweichende Laufzeit aufweist. Hinter einem Photodetektor **10** findet sich wieder das 20 MHz-Signal, das allerdings gegenüber dem 20 Mhz-Signal des ersten Messpfads 5 infolge des dispersionsbedingten Laufzeitunterschieds eine Phasenverschiebung aufweist. Um die Phasenverschiebung zu messen, werden zunächst beide 20 MHz-Signale mittels einer an beide Pfade 5, 8 angeschlossenen Frequenzquelle **11** durch Frequenzmischung in einen niedrigeren Frequenzbereich (z.B. 11 kHz) umgesetzt. Die umgesetzten Signale werden jeweils mit einem Verstärker **12, 13** verstärkt und mit einem Begrenzer **14, 15** amplitudenbegrenzt, damit die Amplitude des Messsignals nicht in das Messergebnis eingeht, und schließlich einer digitalen Phasenmesseinrichtung **16** zugeführt. Ein nachgeschalteter Tiefpass **17** mit niedriger Grenzfrequenz (z.B. 50 Hz) mittelt das Rauschen weitgehend heraus.

Alternativ zum hier gezeigten Aufbau kann die Phasenmesseinrichtung auch zwei identische Phasenmesser aufweisen, deren Kennlinien mittels eines dem Phasenmesser vorgeschalteten Inverters um 180° gegeneinander versetzt sind, wie in der EP-A-1 233 256 näher beschrieben.

Der Messvorgang an dem Lichtwellenleiter 2 spielt sich folgendermaßen ab:

Der Lichtwellenleiter 2 wird mit dem amplitudenmodulierten Signal der Lichtquelle 3 gespeist. Auf der Empfangsseite werden die optischen Filter 6, 9 im gewünschten Wellenlängenbereich durchgestimmt. Die Abstimmung kann kontinuierlich oder schrittweise erfolgen. Zu jeder Momentanwellenlänge λ wird die Ausgangsspannung der Phasenmesseinrichtung 16, d.h. die Phasendifferenz Δβ, bestimmt und damit der Gruppenlaufzeitunterschied dt_{g}= Δβ/ω berechnet. Aufgrund der Konstruktion oder durch in der Vorrichtung 1 gespeicherte Kalibrierdaten ist bei jeder Momentanwellenlänge λ, auf welche die Vorrichtung 1 abgestimmt ist, auch der genaue Wert des zugehörigen Abstands dλ der beiden Filter bekannt. Unter Berücksichtigung der Länge L des Lichtwellenleiters 2 ergibt sich dann der Dispersionskoeffizient D zu D= 1/L *dt_{g}/dλ.

## Patentansprüche

1. Verfahren zum Messen der chromatischen Dispersion einer optischen Übertragungsstrecke, vorzugsweise eines Lichtwellenleiters (2), wobei ein amplitudenmoduliertes optisches Signal in die zu messende optische Übertragungsstrecke eingespeist wird, wobei das übertragene Signal in einen ersten Messpfad (5), in dem das übertragene Signal bei einer optischen Frequenz demoduliert wird, und in einen zweiten Messpfad (8), in dem das übertragene Signal bei einer weiteren optischen Frequenz mit vorbekanntem Frequenzabstand zur optischen Frequenz des ersten Messpfads (8) demoduliert wird, aufgespaltet wird, wobei aus den demodulierten Signalen des ersten und zweiten Messpfads (5, 8) eine Phasendifferenz (Δβ) bestimmt und daraus die chromatische Dispersion der optischen Übertragungsstrecke ermittelt wird.

2. Verfahren nach Anspruch 1, **dadurch gekennzeichnet, dass** das übertragene Signal zu ca. 50% in den ersten Messpfad (5) und zu ca. 50% in den zweiten Messpfad (8) eingekoppelt wird.

3. Verfahren nach Anspruch 1 oder 2, **dadurch gekennzeichnet, dass** vor der Phasendifferenzmessung die demodulierten Signale in einen niedrigeren Frequenzbereich umgesetzt werden.

4. Vorrichtung (1) zum Messen der chromatischen Dispersion einer optischen Übertragungsstrecke, vorzugsweise eines Lichtwellenleiters (2), insbesondere zur Durchführung des Verfahrens nach einem der vorhergehenden Ansprüche,
mit einer amplitudenmodulierten, breitbandigen Lichtquelle (3) eingangsseitig der zu messenden optischen Übertragungsstrecke, mit einer das übertragene optische Signal in einen ersten Messpfad (5) und einen zweiten Messpfad (8) aufspaltenden Einrichtung (4), mit jeweils einem abstimmbaren schmalbandigen optischen Filter (6, 9) im ersten Messpfad (5) und im zweiten Messpfad (8), mit jeweils einem Photodetektor (7, 10) im ersten Messpfad (5) und im zweiten Messpfad (8) und mit einer ausgangsseitig der beiden Photodetektoren (7, 10) vorgesehenen Phasenmesseinrichtung (16) zum Ermitteln der jeweils zwischen erstem und zweiten Messpfad (5, 8) vorhandenen Phasendifferenzen (Δβ), aus denen die chromatische Dispersion der optischen Übertragungsstrecke bestimmt werden kann.

5. Vorrichtung nach Anspruch 4, **gekennzeichnet durch** eine mit dem ersten Messpfad (5) und dem zweiten Messpfad (8) verbundene Frequenzquelle (11), welche die demodulierten Signale beider Messpfade (5, 8) **durch** Frequenzmischen in einen niedrigeren Frequenzbereich umsetzt.

6. Vorrichtung nach Anspruch 4 oder 5, **dadurch gekennzeichnet, dass** die beiden abstimmbaren schmalbandigen optischen Filter (6, 9) durch eine gemeinsame optische Baugruppe gebildet werden.
